# EUROPÄISCHE PATENTSCHRIFT

(11) **EP 1 002 292 B1**
(45) Veröffentlichungstag und Bekanntmachung des Hinweises auf die Patenterteilung: **08.10.2003**
(21) Anmeldenummer: 98947335.0
(22) Anmeldetag: 24.07.1998
(51) Int. Cl.: G06K 19/07

(54) **SCHALTUNGSANORDNUNG ZUM MANIPULIERGESCHÜTZTEN EMPFANGEN EINES OOK-MODULIERTEN SIGNALS**
CIRCUIT FOR MANIPULATION-PROTECTED RECEPTION OF AN OOK-MODULATED SIGNAL
MONTAGE POUR LA RECEPTION PROTEGEE CONTRE LES MANIPULATIONS D'UN SIGNAL MODULE PAR TOUT OU RIEN

(30) Priorität: 29.07.1997 DE 19732643
(43) Veröffentlichungstag der Anmeldung: 24.05.2000
(73) Patentinhaber: Infineon Technologies AG, 81669 München (DE)
(72) Erfinder: REINER, Robert, D-85579 Neubiberg (DE)
(74) Vertreter: Epping Hermann & Fischer
(86) Internationale Anmeldenummer: DE9802094
(87) Internationale Veröffentlichungsnummer: WO99006939

(56) Entgegenhaltungen:
- EP-A- 0 282 926
- EP-A- 0 387 071
- US-A- 4 641 374

## Beschreibung

Die Erfindung betrifft eine Schaltungsanordnung zum Empfangen eines OOK(ON-OFF-KEYING)-modulierten Signals, insbesondere zur Verwendung in einem Datenträger eines Identsystems, mit einer Empfangsschaltung, einer dieser nachgeschalteten Demodulatorschaltung, einer dieser nachgeschalteten Dekodierschaltung und mit einer Ablaufsteuerung zur Steuerung insbesondere des Empfangs, der Demodulation und der Verarbeitung der empfangenen Daten.

Eine solche Schaltungsanordnung ist aus der EP 0 669 591 A2 bekannt.

Bei Identsystemen werden Daten zwischen einer stationären oder quasi-stationären Einheit und einer mobilen bzw. tragbaren, zumindest einen Speicher aufweisenden Einheit - im folgenden Datenträger genannt - ausgetauscht und häufig auch Energie von der stationären Einheit zum Datenträger, vorzugsweise mittels induktiver Kopplung oder elektromagnetischer Strahlung übertragen. Beispiele hierfür sind Zutritts-Kontrolleinrichtungen mit einem tragbaren Identifikanten, wie beispielsweise einer Chipkarte. Aber auch elektronische Wegfahrsperren mit einem Schlüssel-Schloß-System zählen zu den gattungsgemäßen Identsystemen.

Bei gattungsgemäßen Identsystemen werden Daten von der stationären Einheit zum Datenträger mittels OOK-Modulation übertragen, wobei das hochfrequente Trägersignal - eventuell nach geeigneter Teilung und/oder Aufbereitung für digitale Signalverarbeitung - direkt als Taktsignal verwendet wird, so daß die aufgrund der Modulation auftretenden Austastlücken im Trägersignal ebenfalls im Taktsignal erscheinen. Außerdem wird durch Gleichrichtung und Glättung des übertragenen Signals die zur Versorgung des Datenträgers nötige Energie gewonnen.

Eine Demodulation des OOK-modulierten Trägersignals erfolgt entweder direkt aus dem übertragenen und empfangenen Signal oder erst aus dem daraus gewonnenen Taktsignal. Dies ist möglich, da das Taktsignal ebenfalls die Austastlücken und damit die Modulation aufweist. Die Schaltungen im Datenträger des bekannten Identsystems sind dabei derart ausgelegt, daß ein kurzzeitiges Ausblenden des Taktes toleriert wird.

Der Empfang von Daten läuft dabei nach einem vorgegebenen Protokoll ab, das von einer Ablaufsteuerung (state machine) gesteuert wird. Eine Unterbrechung des Taktes zu einem anderen Zeitpunkt als nach den Regeln des Empfangsprotokolls erlaubt ist, führt zu einem Abbruch des Empfangs.

Aus der EP 0 387 071 A1 ist darüberhinaus bekannt, bei einem Transponder aus dem Taktsignal, das aus einem OOK-modulierten Trägersignal abgeleitet wurde, ein Resetsignal abzuleiten, das Schaltungsteile des Transponders zurücksetzt, wenn die Pause zwischen zwei Zeiträumen, in denen ein Trägersignal vorliegt, eine bestimmte Zeitdauer überschreitet.

Nach dem Empfang von Daten, die Befehle darstellen können oder auch abzuarbeitende Werte, werden diese verarbeitet. Eine solche Verarbeitung umfaßt Lesen und Schreiben von Daten beziehungsweise Werten in den nichtflüchtigen Speicher des Datenträgers sowie ebenso das Senden von Daten zur stationären Einheit und eventuell das Verschlüsseln von Daten. Während der Abarbeitung der empfangenen Daten erwartet der Datenträger keine weiteren Daten und somit keine Unterbrechung des Taktes, da keine Modulation des Trägersignals von der stationären Einheit erfolgt.

Dies führt allerdings zu einem Sicherheitsrisiko, da prinzipiell das Anhalten des Taktes toleriert wird. Ein Hacker könnte nun den Takt anhalten bzw. ausblenden und den jeweiligen Zustand der Schaltung untersuchen und somit den Aufbau und die Arbeitsweise erkunden, um sich eine Simulationsmöglichkeit zu erarbeiten.

Um diesem Problem zu begegnen, gibt es bereits die Tendenz in der Fachwelt, statt einer 100% OOK-Modulation eine Amplitudenmodulation mit geringerem Modulationsindex zu verwenden. Dies bedeutet jedoch, daß eine weniger robuste Demodulation auf dem Datenträger realisiert werden muß, was zu erhöhten Kosten durch geringere Ausbeute, aufwendigere Meßverfahren oder schlechtere Kompatibilität führt.

Das Problem vorliegender Erfindung ist es daher, bei gattungsgemäßen Schaltungsanordnung obige Nachteile zu vermeiden.

Das Problem wird durch die Merkmale des Anspruchs 1 gelöst. Vorteilhafte Weiterbildungen sind in den Unteransprüchen angegeben.

Gemäß dem Anspruch 1 ist zwischen der Demodulatorschaltung und der Dekodierschaltung der Datenträgerschaltungsanordnung eines Identsystems ein Schaltmittel angeordnet, mittels dem der Ausgang der Demodulatorschaltung in dem Betriebszustand, in dem keine Daten empfangen werden, - gesteuert durch die Ablaufsteuerung - mit dem Reseteingang der Schaltungsanordnung verbunden wird.

Wenn keine Daten von einer Lesestation eines Identsystems zu einem Datenträger gesendet werden, ist das Trägersignal, das zur Energieübertragung nach wie vor gesendet werden muß, nicht moduliert, so daß die Demodulatorschaltung ein konstantes Signal abgibt, während das Taktsignal, das ebenfalls aus dem Trägersignal abgeleitet wird, keine Lücken aufweist.

Wenn nun ein Hacker das Trägersignal und damit das Taktsignal unterbricht, um in diesem Unterbrechungszeitraum den Zustand der Schaltungsanordnung untersuchen zu können, würde die Demodulatorschaltung den Zustand an ihrem Ausgang ändern, der dann in erfindungsgemäßer Weise einen Reset der Schaltungsanordnung herbeiführt, so daß eine Untersuchung momentaner Zustände der Schaltungsanordnung durch Unterbrechung des Taktes nicht möglich ist.

Die Ableitung des Taktsignals aus dem hochfrequenten Trägersignal kann beispielsweise durch Begrenzung und Transformation auf den Schaltungspegel erfolgen. Abhängig von der gewählten Logik wird dann das Taktsignal in einer Taktpause einen Low- oder einen High-Pegel aufweisen. Wenn die Demodulatorschaltung eine erste Pausenerkennungsschaltung aufweist, die in vorteilhafter, weil einfacher und damit kostengünstiger Weise mit einen retriggerbaren Monoflop gebildet ist, ist es nötig, den Zustand des zu demodulierenden Signals während einer Trägersignalausblendung zu kennen. Das zu demodulierende Signal kann dabei, wie bereits ausgeführt wurde, entweder das bereits aus dem von einer Lesestation gesendeten und vom Datenträger empfangenen Signal abgeleitete Taktsignal sein, oder ein Signal, das in der Demodulatorschaltung aus dem empfangenen Signal abgeleitet und auf den Schaltungspegel transformierte Signal sein.

Um einen besseren Schutz vor Hackerangriffen zu gewährleisten, kann in vorteilhafter Weise die Ruhelage des der ersten Pausenerkennungsschaltung zugeführten Signals undefiniert sein. In diesem Fall ist in erfindungsgemäßer Weise der in der Demodulatorschaltung enthaltenen ersten Pausenerkennungsschaltung eine weitere Pausenerkennungsschaltung mit negiertem Eingang parallel geschaltet, wobei der Ausgang dieser weiteren Pausenerkennungsschaltung mit dem Reseteingang der Schaltungsanordnung verbunden ist. Die Verbindung sowohl des zweiten Ausgangs des Schaltmittels als auch des Ausgangs der zweiten Pausenerkennungsschaltung mit dem Reseteingang der Schaltungsanordnung kann beispielsweise mittels eines ODER-Gatters erfolgen. Durch diese vorteilhafte Weiterbildung ist sichergestellt, daß jede Taktunterbrechung unabhängig vom dabei auftretenden Pegel des der Demodulatorschaltung zugeleiteten Signals erkannt wird und zu einem Reset führt. In äquivalenter Weise wäre es auch möglich, der ersten Pausenerkennungsschaltung in der Demodulatorschaltung eine Differenzierschaltung vorzuschalten.

Die bisherige Ausgestaltung der erfindungsgemäßen Schaltungsanordnung erlaubt ein Reset, wenn die Schaltungsanordnung im Datenverarbeitungs-Betriebszustand ist, also keine Empfangsdaten erwartet. Während des Empfangs von Daten werden die Unterbrechungen des Taktes toleriert, da jede übertragene logische "0" zu einer Unterbrechung führt. Auch diese Tatsache könnte von einem Hacker mißbraucht werden.

Zur Lösung dieses Problems ist bei einer vorteilhaften Weiterbildung der Erfindung eine dritte Pausenerkennungsschaltung der ersten Pausenerkennungsschaltung parallel geschaltet. Auch der Ausgang dieser dritten Pausenerkennungsschaltung ist mit dem Reseteingang der Schaltungsanordnung, beispielsweise ebenfalls über das ODER-Gatter, verbunden. Die dritte Pausenerkennungsschaltung hat allerdings eine verglichen mit der ersten Pausenerkennungsschaltung deutlich längere Verzögerungszeit, so daß ein Schaltungsreset zwar unbedingt erfolgt, jedoch erst bei relativ langen Pausen im Taktsignal.

Die Erfindung wird nachfolgend anhand eines Ausführungsbeispiels mit Hilfe von Figuren näher erläutert. Dabei zeigt:
Figur 1 ein Prinzipblockschaltbild einer erfindungsgemäßen Schaltungsanordnung,
Figur 2 eine detaillierte Schaltung eines retriggerbaren Monoflops und
Figur 3 ein zugehöriges Signaldiagramm.

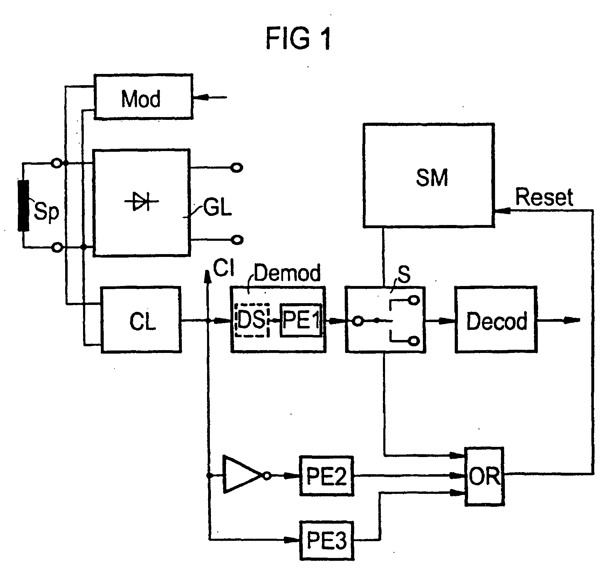

Figur 1 zeigt eine als Spule Sp ausgebildete Empfangsantenne eines Datenträgers für ein gattungsgemäßes Identsystem. Die Klemmen der Spule Sp sind mit einer Gleichrichterschaltung GL verbunden, an deren Ausgängen die für den Datenträger nötige Versorgungsspannung zur Verfügung gestellt wird. Zur Übertragung von Daten vom Datenträger zu einer stationären Einheit ist ein Modulator Mod vorgesehen, dessen Ansteuerung lediglich durch einen Pfeil angedeutet ist, da dieser Modulator für die Erfindung ohne Bedeutung ist. Die Klemmen der Empfangsantenne Sp sind außerdem mit einer Taktgewinnungsschaltung CL verbunden, die an ihrem Ausgang ein Taktsignal Cl abgibt.

Zur Übertragung von Daten von der stationären Einheit zum Datenträger kommt eine OOK-Modulation zum Einsatz, so daß im Trägersignal Austastlücken vorkommen. Das Taktsignal Cl weist ebenfalls diese Austastlücken aus, so daß zur Demodulation in einem Demodulator Demod dieses Taktsignal Cl herangezogen werden kann. Es wäre allerdings ebenso möglich, das Ausgangssignal der Antennenspule Sp direkt dem Demodulator Demod zuzuführen. In diesem Fall wäre - abhängig vom verwendeten Demodulatortyp - zusätzlich eine geeignete Signalaufbereitungsschaltung nötig.

Das Ausgangssignal der Demodulatorschaltung Demod wird über ein Schaltmittel S einer Dekodierschaltung Dekod zugeführt. Das Ausgangssignal der Dekodierschaltung Dekod wird im Datenträger weiter verarbeitet, was durch einen Pfeil angedeutet ist. Die weitere Verarbeitung ist für das Verständnis der erfindungsgemäßen Schaltungsanordnung nicht von Bedeutung und wird daher nicht weiter ausgeführt.

Das Schaltmittel S wird von einer Ablaufsteuerung SM angesteuert und hat einen zweiten Ausgang, der mit dem Reset-Eingang der Ablaufsteuerung SM verbunden ist. Abhängig von der Ansteuerung durch die Ablaufsteuerung SM verbindet das Schaltmittel S den Ausgang der Demodulatorschaltung Demod entweder mit der Dekodierschaltung Dekod oder - im dargestellten Beispiel - über ein ODER-Gatter OR mit dem Reset-Eingang der Ablaufsteuerung SM.

Hierbei ist in einem ersten Betriebsfall, in dem Daten von der stationären Einheit empfangen werden, die Dekodierschaltung Dekod mit der Demodulatorschaltung Demod verbunden. Die gesamte Schaltungsanordnung ist so ausgelegt, daß Austastlükken im Taktsignal Cl toleriert werden, so lange sie im Rahmen des Empfangsprotokolls auftauchen.

In einem zweiten Betriebsfall, in dem die empfangenen Daten in der Schaltungsanordnung verarbeitet werden, erwartet die Schaltungsanordnung bzw. der Datenträger keine Daten von der stationären Einheit, so daß keine Modulation des Trägersignals vorliegt und somit auch keine Austastlücken auftreten dürften. Treten sie dennoch auf, so liegt mit hoher Wahrscheinlichkeit ein Mißbrauch vor. Um diesen Mißbrauch auszuschließen, wird in erfindungsgemäßer Weise im zweiten Betriebsfall von der Ablaufsteuerung SM der Ausgang der Demodulatorschaltung Demod mit dem Reset-Eingang der Ablaufsteuerung SM verbunden, so daß das Auftreten einer Austastlücke im Taktsignal Cl zu einem Reset der gesamten Schaltungsanordnung führt.

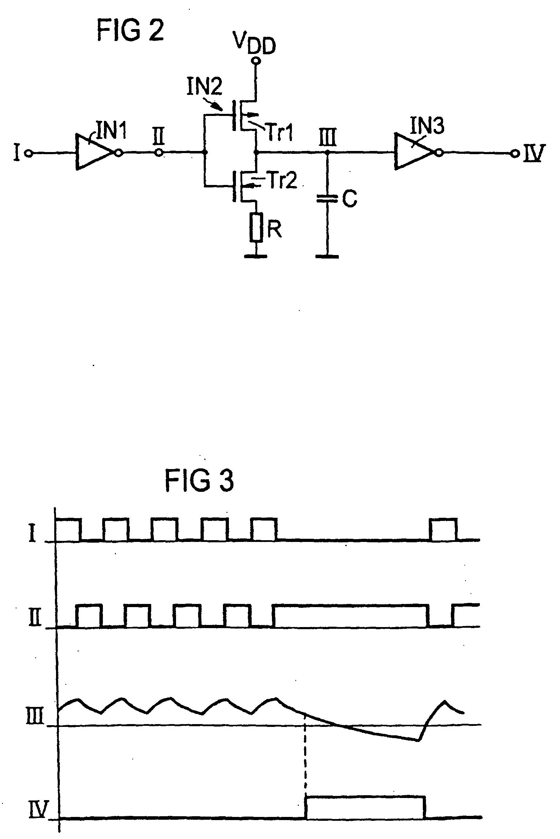

Die Demodulatorschaltung Demod weist eine erste Pausenerkennungsschaltung PE1 auf, die beispielsweise mit einem in der Figur 2 dargestellten retriggerbaren Monoflop gebildet sein kann. Eine solche Pausenerkennungsschaltung kann nur eine Taktpause bestimmter Polarität erkennen. Falls eine Austastlücke des Taktsignals Cl keine definierte Polarität aufweist, was bei einem Angriff durch Hacker geschehen kann, ist in erfindungsgemäßer Weiterbildung eine zweite Pausenerkennungsschaltung PE2 mit zur ersten Pausenerkennungsschaltung PE1 negiertem Eingang vorgesehen, deren Ausgang ebenfalls über das ODER-Gatter OR dem Reset-Eingang der Ablaufsteuerung SM zugeführt wird.

Da die Schaltungsanordnung gemäß Figur 1 im Empfangsbetriebsfall Austastlücken im Taktsignal Cl toleriert, könnte ein Hacker versuchen, in diesem Betriebsfall die Schaltung durch Verlängerung der Austastlücken zu untersuchen. Um einem solchen Mißbrauch vorzubeugen, ist in erfindungsgemäßer Weiterbildung eine dritte Pausenerkennungsschaltung PE3 vorgesehen, der ebenfalls das Taktsignal Cl zugeführt wird und die auf den Reset-Eingang der Ablaufsteuerung SM über das ODER-Gatter OR wirkt. Diese dritte Pausenerkennungsschaltung PE3 hat jedoch eine gegenüber den beiden anderen Pausenerkennungsschaltungen PE1, PE2 größere Zeitverzögerung, da sie einerseits unbedingt ansprechen, andererseits aber nicht bei durch normale Modulation bedingte Austastlücken einen Schaltungs-Reset bewirken soll. Typische Verzögerungszeiten für die Pausenerkennungsschaltungen sind bei einer Trägerfrequenz von 13,56MHz, die der Industriefrequenz entspricht, für die erste und zweite Pausenerkennungsschaltung PE1, PE2 etwa 300ns und für die dritte Pausenerkennungsschaltung etwa 6µs.

Statt der Verwendung einer zweiten Pausenerkennungsschaltung PE2 mit invertiertem Eingang kann auch der ersten Pausenerkennungsschaltung PE1 eine Differenzierschaltung DS vorgeschaltet werden, was in Figur 1 strichliert angedeutet ist. Auch damit können beide Polaritäten einer Austastlücke im Taktsignal Cl detektiert werden.

Figur 2 zeigt ein Ausführungsbeispiel für eine Pausenerkennungsschaltung in Form eines retriggerbaren Monoflops. Das dargestellte Monoflop besteht aus drei in Reihe geschalteten Invertern IN1 bis IN3, wobei zwischen dem Sourceanschluß des n-Kanal-Transistors Tr2 des zweiten Inverters IN2 und dem Masseanschluß Vss ein Widerstand R geschaltet ist. Außerdem ist parallel zur Laststrecke des n-Kanal-Transistors Tr2 des zweiten Inverters IN2 und dem Widerstand R ein Kondensator C geschaltet.

Die Funktion der Schaltung gemäß Figur 2 soll anhand der Signaldiagramme gemäß Figur 3 erläutert werden. Die Punkte der Schaltung, an denen die Signale betrachtet werden, sind mit römischen Ziffern I bis IV bezeichnet. Am Eingang der Schaltung I soll beispielsweise das Taktsignal Cl anliegen. Dieses weist bei Übertragung einer oder auch mehrerer logischer Low-Zustände eine Austastlücke bzw. Pause auf. Dieses Signal wird durch den ersten Inverter IN1 invertiert und dem Eingang des zweiten Inverters IN 2 zugeführt. Das invertierte Signal ist unter II dargestellt. Wenn das Signal am Eingang des zweiten Inverters IN2 einen logischen Low-Zustand aufweist, ist der p-Kanal-Transistor Tr1 des zweiten Inverters IN2 durchgeschaltet, so daß sich der Kondensator C auflädt. Ändert das Signal am Eingang des zweiten Inverters IN2 seinen Zustand zu einem logischen High-Pegel, sperrt der p-Kanal-Transistor Tr1 und der n-Kanal-Transistor Tr2 leitet, so daß sich der Kondensator C über die Laststrecke dieses n-Kanal-Transistors Tr2 und den Widerstand R entlädt. Der Kondensator C und der Widerstand R müssen dabei so dimensioniert sein, daß die Schaltschwelle des dritten Inverters IN3 während einer halben Periodendauer des Taktsignals nicht unterschritten wird. Erst wenn eine Pause im Eingangssignal des Monoflops vorkommt, kann sich der Kondensator C soweit entladen, daß die Schaltschwelle des dritten Inverters IN3 unterschritten wird und der Ausgang des dritten Inverters IN3 seinen Zustand ändert.

Das Taktsignal Cl könnte je nach Art der verwendeteten Taktaufbereitungsschaltung CL auch den Verlauf aufweisen, wie er unter II dargestellt ist, das heißt bei einer Pause einen High-Pegel aufweisen. Um auch eine Pause bei einem solchen Signalverlauf mit einer Schaltung gemäß Figur 2 detektieren zu können, muß lediglich entweder ein weiterer Inverter vorgeschaltet werden oder der erste Inverter weggelassen werden.

Mit der erfindungsgemäßen Schaltungsanordnung und den vorteilhaften Weiterbildungen kann in zuverlässiger Weise ein Mißbrauch bei Identsystemen, die eine 100% OOK-Modulation verwenden, verhindert werden.

## Patentansprüche

1. Schaltungsanordnung zum Empfangen eines OOK-modulierten Signals, insbesondere zur Verwendung in einem Datenträger eines Identsystems,
- mit einer Demodulatorschaltung (Demod),
- mit einer dieser nachgeschalteten Dekodierschaltung (Dekod) und
- mit einer Ablaufsteuerung (SM) zur Steuerung insbesondere des Empfangs, der Demodulation und der Verarbeitung der empfangenen Daten,
**dadurch gekennzeichnet,**
**daß** zwischen der Demodulatorschaltung (Demod) und der Dekodierschaltung (Dekod) ein von der Ablaufsteuerung (SM) ansteuerbares Schaltmittel (S) angeordnet ist, dessen Eingang mit dem Ausgang der Demodulatorschaltung (Demod) und dessen erster Ausgang mit dem Eingang der Dekodierschaltung (Dekod) verbunden ist,
**daß** das Schaltmittel (S) einen zweiten Ausgang aufweist, der mit dem Reset-Eingang der Schaltungsanordnung verbunden ist, und
**daß** das Schaltmittel (S) derart von der Ablaufsteuerung (SM) ansteuerbar ist, daß in dem Betriebszustand, in dem Daten empfangen werden, der Ausgang der Demodulatorschaltung (Demod) über das Schaltmittel (SM) mit dem Eingang der Dekodierschaltung (Decod) und in dem Betriebszustand, in dem keine Daten empfangen werden mit dem Reset-Eingang der Schaltungsanordnung verbunden ist, wobei ein Reset nur bei Unterbrechung des Trägersignals erfolgt.

2. Schaltungsanordnung nach Anspruch 1,
**dadurch gekennzeichnet,**
**daß** die Demodulatorschaltung (Demod) mit einer ersten Pausenerkennungsschaltung (PE1) gebildet ist.

3. Schaltungsanordnung nach Anspruch 2,
**dadurch gekennzeichnet,**
**daß** der ersten Pausenerkennungsschaltung (PE1) eine zweite Pausenerkennungsschaltung (PE2) parallelgeschaltet ist, wobei der Ausgang der zweiten Pausenerkennungsschaltung (PE2) und der zweite Ausgang des Schaltmittels (S) mittels eines ODER-Gatters (OR) verknüpft sind.

4. Schaitungsanordnung nach Anspruch 2,
**dadurch gekennzeichnet,**
**daß** der ersten Pausenerkennungsschaltung (PE1) eine Differenzierschaltung (DS) vorgeschaltet ist.

5. Schaltungsanordnung nach einem der Ansprüche 1 bis 4,
**dadurch gekennzeichnet,**
**daß** eine dritte Pausenerkennungsschaltung (PE3) mit im Verhältnis zur ersten Pausenerkennungsschaltung (PE1) größeren Verzögerungszeit der ersten Pausenerkennungsschaltung (PE1) parallelgeschaltet ist und daß deren Ausgang ebenfalls mit dem Reset-Eingang der Schaltungsanordnung verbunden ist.

6. Schaltungsanordnung nach einem der Ansprüche 1 bis 5,
**dadurch gekennzeichnet,**
**daß** die Pausenerkennungsschaltungen (PE1, PE2, PE3) mit einem retriggerbaren Monoflop gebildet sind.

## Claims

1. Circuit arrangement for receiving an OOK-modulated signal, in particular for use in a data carrier of an identification system,
- having a demodulator circuit (demod),
- having a decoding circuit (decod) connected downstream of the latter and
- having a sequential control (SM) for controlling in particular the reception, demodulation and processing of the received data,
**characterized in that** a switching element (S) which can be driven by the sequential control (SM) is arranged between the demodulator circuit (demod) and the decoding circuit (decod), the input of said switching element (S) being connected to the output of the demodulator circuit (demod) and its first output being connected to the input of the decoding circuit (decod), **in that** the switching element (S) has a second output which is connected to the reset input of the circuit arrangement, and
**in that** the switching element (S) can be driven by the sequential control (SM) in such a way that the output of the demodulator circuit (demod) is connected via the switching means (SM) to the input of the decoding circuit (decod) in the operating state in which data are received, and to the reset input of the circuit arrangement in the operating state in which no data are received a reset taking place only when the carrier signal is interrrupted.

2. Circuit arrangement according to Claim 1, **characterized in that** the demodulator circuit (demod) is formed with a first pause recognition circuit (PE1).

3. Circuit arrangement according to Claim 2, **characterized in that** a second pause recognition circuit (PE2) is connected in parallel with the first pause recognition circuit (PE1), the output of the second pause recognition circuit (PE2) and the second output of the switching element (S) being logically linked by means of an OR gate (OR).

4. Circuit arrangement according to Claim 2, **characterized in that** a differentiating circuit (DS) is connected upstream of the first pause recognition circuit (PE1).

5. Circuit arrangement according to one of Claims 1 to 4, **characterized in that** a third pause recognition circuit (PE3) with a longer delay time than that of the first pause recognition circuit (PE1) is connected in parallel with the first pause recognition circuit (PE1), and **in that** its output is also connected to the reset input of the circuit arrangement.

6. Circuit arrangement according to one of Claims 1 to 5, **characterized in that** the pause recognition circuits (PE1, PE2, PE3) are formed with a retriggerable monoflop.

## Revendications

1. Montage de réception d'un signal modulé par tout ou rien, destiné notamment à être utilisé dans un support de données d'un système d'identification,
- comprenant un circuit (Demod) de démodulateur,
- comprenant un circuit (Dekod) de décodeur monté en aval de celui-ci et,
- comprenant une commande (SM) de déroulement, destinée à commander notamment la réception et la démodulation et le traitement des données reçues,
**caractérisé,**
**en ce qu'**entre le circuit (Démod) de démodulateur et le circuit (Dekod) de décodeur est monté un moyen (S) de commutation qui peut être commandé par la commande (SM) de déroulement, dont l'entrée est reliée à la sortie du circuit (Demod) de démodulateur et dont une première sortie est reliée à l'entrée du circuit (Dekod) de décodeur,
**en ce que** le moyen (S) de commutation a une deuxième sortie, qui est reliée à l'entrée de remise à l'état initial du montage, et
**en ce que** le moyen (S) de commutation peut être commandé par la commande (SM) de déroulement, de façon à ce que, dans l'état de fonctionnement dans lequel des données sont reçues, la sortie du circuit (Demod) de démodulateur est reliée par le moyen (SM) de commutation à l'entrée du circuit (Dekod) de décodeur et, dans l'état de fonctionnement dans lequel des données ne sont pas reçues, est reliée à l'entrée de remise à l'état initial du montage, une remise à l'état initial ne s'effectuant que lors d'une interruption du signal porteur.

2. Montage suivant la revendication 1,
**caractérisé**
**en ce que** le circuit (Demod) de démodulateur est formé d'un premier circuit (PE1) de reconnaissance d'intervalle.

3. Montage suivant la revendication 2,
**caractérisé**
**en ce qu'**un deuxième circuit (PE2) de reconnaissance d'intervalle est monté en parallèle avec le premier circuit (PE1) de reconnaissance d'intervalle, la sortie du deuxième circuit (PE2) de reconnaissance d'intervalle et la deuxième sortie du moyen (S) de commutation étant associées au moyen d'une porte (OR) OU.

4. Montage suivant la revendication 2,
**caractérisé**
**en ce qu'**un circuit (DS) de différentiation est monté en amont du premier circuit (PE1) de reconnaissance d'intervalle.

5. Montage suivant l'une quelconque des revendications 1 à 4,
**caractérisé**
**en ce qu'**un troisième circuit (PE3) de reconnaissance d'intervalle ayant un temps de retard plus grand que celui du premier circuit (PE1) de reconnaissance d'intervalle est monté en parallèle au premier circuit (PE1) de reconnaissance d'intervalle, et en ce que sa sortie est reliée également à l'entrée de remise à l'état initial du montage.

6. Montage suivant l'une quelconque des revendications 1 à 5,
**caractérisé**
**en ce que** les circuits (PE1, PE2, PE3) de reconnaissance d'intervalle sont formés d'une bascule qui peut être redéclenchée.
